# EUROPEAN PATENT APPLICATION

(11) **EP 3 028 800 A1**
(43) Date of publication of application: **08.06.2016**
(21) Application number: 15196501.9
(22) Date of filing: 26.11.2015
(51) Int. Cl.: B23K 9/028, B23K 9/18, B23K 10/02, B23K 37/053, F01D 5/06

(54) **PORTABLE WELDING MACHINE AND METHOD FOR WELDING ROTOR PARTS TOGETHER**

(30) Priority: 01.12.2014 CZ 20140837
(71) Applicant: Siemens S.r.o., 155 00 Prague (CZ)
(72) Inventor: Julis, Martin, 63500 Brno (CZ); Kubicek, Jaroslav, 66462 Hrusovany u Brna (CZ); Podrabsky, Tomas, 60200 Brno (CZ); Barak, Martin, 62100 Brno (CZ); Beran, David, 58301 Havl. Brod (CZ); Kucera, Drahoslav, 66461 Rajhrad (CZ); Topic, Pavel, 62800 Brno (CZ)
(74) Representative: Maier, Daniel Oliver

(57) **Abstract**

The present invention is related to a portable welding machine (50) for welding a first rotor part (12) and at least a second rotor part (13) of a rotor (11), in particular a hollow rotor. Further the invention relates to a method for welding a first rotor part (12) and at least one second rotor part (13) of a rotor (11), in particular a hollow rotor, by such a portable welding machine (50).

## Description

The invention relates to a portable welding machine for welding a first rotor part and at least a second rotor part of a rotor, in particular a hollow rotor. Further, the invention relates to a method for welding a first rotor part and at least one second rotor part of a rotor, in particular a hollow rotor.

Turbine and generator rotors undergo high stresses and, from a safety aspect, are the most significant components of a turbine generator system. Depending on the appropriate operating temperatures, the rotors (shafts) can be fabricated out of low/high alloy heat resistance material or of low alloyed, highly toughened material for low pressure application.

The rotors can have a length of up to 12m or more. Further, such rotors, even hollow rotors, can have a weight of up to 40.000kg or more. Thus it is necessary to weld two or more rotors parts together to build the rotor of such a turbine generator system.

One problem is that the big and heavy rotor parts have to be aligned to each other for creating a good welding connection of the rotor parts. It is possible to fix two rotor parts next to each other, so that the end faces of the rotor parts contact each other. After that a welding machine is moved around the joint connection for welding the rotor parts together. To do this the rotor parts are orientated in a vertical orientation, so that the welding machine can easily be moved around the rotor parts. It is possible to weld in short and thick gaps between the end faces of the rotor parts.

It is an object of the present invention to solve aforesaid problems of welding at least to rotors parts together at least partly. In particular, it is an object of the present invention to provide a flexible welding machine and a method for welding rotor parts together, which enable a simple and good welding connection between the rotor parts of turbine generator system, in particular in deep narrow gaps between the rotor parts. Further, the affected area of the rotor parts during welding shall be kept small.

Aforesaid objects are solved by a portable welding machine according to independent claim 1 and a method for welding a first rotor part and at least one second rotor part according to independent claim 8. Further features and details of the present invention result from the sub claims, the description and the drawings. Features and details discussed with respect to the portable welding machine can also be applied to the method, and vice versa.

According to a first aspect of the invention the aforesaid object is solved by portable welding machine for welding a first rotor part and at least one second rotor part of a rotor, in particular a hollow rotor. The portable welding machine comprises a machine body. At the machine body a plasma arc welding unit is arranged. Further at least one motorized roller for supporting the first rotor part and at least one motorized roller for supporting the at least one second rotor part are provided, wherein the rotation of the at least one motorized roller of the first rotor part is aligned in such a way to the rotation of the at least one motorized roller of the at least one second rotor part that the rotor parts rotate with the same rotation speed. The plasma arc welding unit is constructed in such a way that during rotation of the motorized rollers the rotating rotor parts can be welded together at the butt joint between the rotor parts.

Such a portable welding machine is very flexible. The welding machine can be arranged at machinery near the rotor parts where the machine is needed. The portable welding machine enables a simple and good welding connection between the two adjacent rotor parts. Because the portable welding machine it is possible to weld deep narrow gaps between two rotor parts. That means the portable welding machine, in particular the plasma arc welding unit, is constructed in such a way that a weld lock in the deep narrow gap between the adjacent rotor parts can be welded without filler material. The affected area of the rotor parts during welding can be kept small, because of the use of the plasma arc welding unit.

Preferred is a welding machine which comprises at least one free-rotation roller for additionally supporting the rotor parts. In particular a preferred welding machine comprises at least one additional free-rotation roller for each rotor part. All rotor parts are set on rollers. Advantageously one rotor part is supported by one motorized roller and one or more free-rotation roller. All rollers together enables that the roller parts are being set-up in a horizontal position in which a fast and relative easy welding can be done.

A welding machine is preferred wherein the machine body comprises fastening means for fixing the machine body to a portal system. The machine body can be moveably fixed at the portal system, so that the plasma arc welding unit can be moved to the exact position where the plasma arc welding unit is needed. In the exact position the plasma arc welding unit is stationary. The rotor parts can be rotated along the plasma arc welding unit by the motorized rollers.

Further, a welding machine is preferred which comprises a submerged arc welding unit arranged at the machine body. Such a welding machine enables that the weld root, including the weld lock, can be plasma welded, wherein the rest of the narrow gap can be filled by submerged arc welding. Both the submerged arc welding unit and the plasma arc welding unit are releasably fixed at the machine body of the welding machine. Depending on the requirements both or only one of the welding units can be fastened at the machine body.

According to a preferred development of the invention a welding machine is characterized in that the plasma arc welding unit comprises a powder filler unit. Therefore it is possible to weld the weld lock in the deep narrow gap between the rotor parts without a filler material by the plasma arc welding unit, wherein the rest of the gap can be welded by the plasma arc welding unit with powder filler material or by the submerged arc welding unit using powder filler material.

According to a preferred development of the invention a portable welding machine can comprise a fixed tip for rotatable holding the free end of the second rotor part, whereby the fixed tip has an AC/DC ground connection. The fixed tip restricts the movement of the rotor parts in a first direction along the longitudinal axis of the rotor parts. Further a portable welding machine is preferred which is characterized in that the portable welding machine comprises additionally a hydraulic press tip for rotatable holding the free end of the first rotor part and pressing the first rotor part against the at least one second rotor part, whereby the hydraulic press tip has a AC/DC ground connection. That means the rotor parts can be pressed against each other. The fixed tip restricts the horizontal movement in one direction. The hydraulic press tip ensures that the movement of the rotor parts is restricted in the other horizontal direction, as well. The hydraulic press tip makes sure that the rotor parts are pressed with a certain force against each other and therefore supports the welding. The AC/DC ground connection enables plasma welding of the rotor parts.

According to a third aspect of the invention the object is solved by a method for welding a first rotor part and at least one second rotor part of a rotor, in particular a hollow rotor, by a portable welding machine according to the first aspect of the invention, in particular according to one of the claims 1 to 7, wherein the method is characterized by following steps:
a) a first rotor part and at least one second rotor part are placed on the motorized roller in such a way that at the butt joint between two adjacent rotor parts are aligned to each other,
b) the first rotor part and the at least one second rotor part are synchronously rotated by the motorized rollers, and
c) the first rotor part and the at least one second rotor part are welded together at the butt joint by the plasma arc welding unit during the rotation of the rotor parts.

The velocity of the rotation of the rotor parts can be controlled by the motorized rollers. The additional free-rotation rollers ensure that the rotor parts a rotatable fixed in a horizontal position. Because of the synchronous rotation of the rotor parts an easy and good welding is possible in the deep narrow gap between two adjacent rotor parts.

After positioning the rotor parts on the rollers the movement of the at least one second rotor part in one direction is restricted at the fixed tip and the free end of the first rotor part is arranged at the hydraulic press tip, which presses the rotor parts against each other during the welding procedure.

According to another preferred development of the invention a method can be characterized in that the weld root, in particular the weld root with the weld lock, is welded by the plasma arc welding unit without filler material and the rest of the narrow gap is welded by the plasma arc welding unit or the submerged arc welding unit using powder filler material of the powder filler unit. Such a welding method enables that the weld area on the rotor parts can be kept small.

The present invention is further described with respect to the accompanying figure. The figure schematically shows:

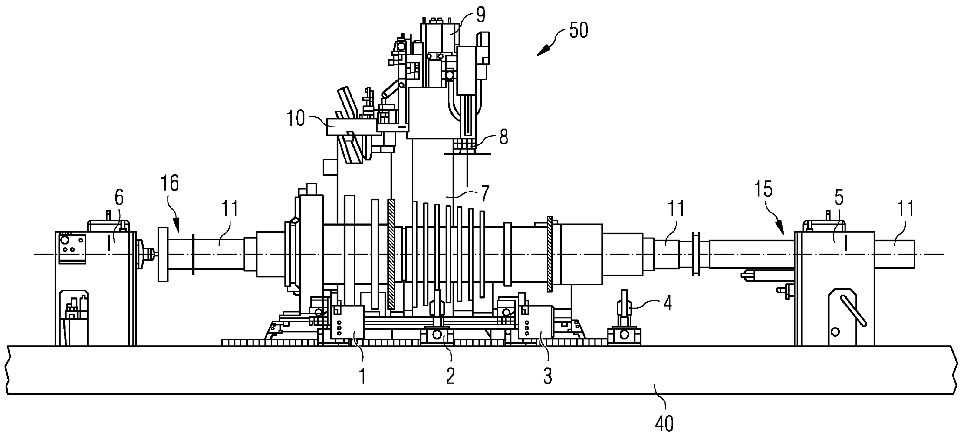

- Fig. 1: a portable welding machine according the invention arranged at two rotor parts.

Fig. 1 shows schematically a portable welding machine 50 arranged at two rotor parts 12, 13 of a rotor 11. The portable welding machine 50 enables to weld rotor parts 12, 13, in particular hollow rotor parts 12, 13, with a thickness of up to 300mm. The portable welding machine 50 comprises a machine body 7. The machine body 7 has a solid base. At the machine body 7 a plasma arc welding unit 8 is releasably arranged. Additionally, but not necessary, a submerged arc welding unit 10 is releasably arranged at the machine body 7 as well.

Thee rotor parts 12, 13 of a rotor 11 are aligned to each other. The portable welding machine 50 comprises two motorized rollers 1, 3 and two free-rotation rollers 2, 4. The first rotor part 12 is supported by a first motorized roller 1 and a first free-rotation roller 2. Thus, the first rotor part 12 can be rotated by the first motorized roller 1. The second rotor part 13 is supported by the second motorized roller 3 and the fixed tip 5. The second rotor part 13 can be rotated by the second motorized roller 3. The motorized rollers 1, 3 enable a synchronized rotation of the rotor parts 12, 13.

The portable welding machine 50 enables to weld a weld lock in the deep narrow gap between the rotor parts 12, 13 by the plasma arc welding unit without using a filler material. Further the portable welding machine 50 to weld the rest of the gap by the plasma arc welding unit or by the submerged arc welding unit using powder filler material.

## Claims

1. Portable welding machine (50) for welding a first rotor part (12) and at least one second rotor part (13) of a rotor (11), in particular a hollow rotor, comprising a machine body (7), arranged at the machine body (7) a plasma arc welding unit (8) and at least one motorized roller (1) for supporting the first rotor part (12) and at least one motorized roller (3) for supporting the at least one second rotor part (13), wherein the rotation of the at least one motorized roller (1) of the first rotor part (12) is aligned in such a way to the rotation of the at least one motorized roller (3) of the at least one second rotor part (13) that the rotor parts (12, 13) rotate with the same rotation speed, wherein the plasma arc welding unit (8) is constructed in such a way that during rotation of the motorized rollers (1, 3) the rotating rotor parts (12, 13) can be welded together at the butt joint between the rotor parts (12, 13).

2. Portable welding machine (50) according to claim 1, **characterized in that** the portable welding machine (50) comprises at least one free-rotation roller (2, 4) for additionally supporting the rotor parts (12, 13).

3. Portable welding machine (50) according to claim 1 or 2, **characterized in that** the machine body (7) comprises fastening means for fixing the machine body (7) to a portal system.

4. Portable welding machine (50) according to any of the preceding claims, **characterized in that** the portable welding machine (50) comprises a submerged arc welding unit (10) arranged at the machine body (7).

5. Portable welding machine (50) according to any of the preceding claims, **characterized in that** the plasma arc welding unit (8) comprises a powder filler unit (9).

6. Portable welding machine (50) according to any of the preceding claims, **characterized in that** the supporting machine (20) comprises a fixed tip (5) for rotatable holding the free end (15) of the second rotor part (13, 14), whereby the fixed tip (5) has a AC/DC ground connection.

7. Portable welding machine (50) according to any of the preceding claims, **characterized in that** the supporting machine (20) comprises a hydraulic press tip (6) for rotatable holding the free end (16) of the first rotor part (12) and pressing the first rotor part (12) against the at least one second rotor part (13), whereby the hydraulic press tip (6) has a AC/DC ground connection.

8. Method for welding a first rotor part (12) and at least one second rotor part (13) of a rotor (11), in particular a hollow rotor, by a portable welding machine (50) according to one of the preceding claims, wherein the method is **characterized by** following steps:
a) a first rotor part (12) and at least one second rotor part (13) are placed on the motorized roller (1, 3) in such a way that at the butt joint between two adjacent rotor parts (12, 13) are aligned to each other,
b) the first rotor part (12) and the at least one second rotor part (13) are synchronously rotated by the motorized rollers (1, 3), and
c) the first rotor part (12) and the at least one second rotor part (13) are welded together at the butt joint by the plasma arc welding unit (8) during the rotation of the rotor parts (12, 13).

9. Method a according to claim 8, **characterized in that** the weld root, in particular the weld root with the weld lock, is welded by the plasma arc welding unit (8) without filler material and that the rest of the narrow gap is welded by the plasma arc welding unit (8) or the submerged arc welding unit (10) using powder filler material of the powder filler unit (9).
